# EUROPÄISCHE PATENTSCHRIFT

(11) **EP 1 002 432 B1**
(45) Veröffentlichungstag und Bekanntmachung des Hinweises auf die Patenterteilung: **13.10.2004**
(21) Anmeldenummer: 98943712.4
(22) Anmeldetag: 22.07.1998
(51) Int. Cl.: H04Q 3/00

(54) **VERFAHREN ZUR EINRICHTUNG UND/ODER BEARBEITUNG EINES DIENSTES EINES INTELLIGENTEN NETZES**
METHOD FOR SETTING UP OR PROCESSING A SERVICE IN AN INTELLIGENT NETWORK
PROCEDE POUR CREER ET/OU EXECUTER UN SERVICE D'UN RESEAU INTELLIGENT

(30) Priorität: 08.08.1997 DE 19734515
(43) Veröffentlichungstag der Anmeldung: 24.05.2000
(73) Patentinhaber: SIEMENS AKTIENGESELLSCHAFT, 80333 München (DE)
(72) Erfinder: DAVUTOGLU, Can, A-1020 Wien (AT)
(86) Internationale Anmeldenummer: PCT/DE1998/002062
(87) Internationale Veröffentlichungsnummer: WO 1999/008452

(56) Entgegenhaltungen:
- WO-A-97/16929
- CHONG H F L ET AL: "METHODOLOGY AND TOOLS FOR INTELLIGENT NETWORK SERVICE SPECIFICATION" PROCEEDINGS OF THE GLOBAL TELECOMMUNICATIONS CONFERENCE (GLOBECOM), SAN FRANCISCO, NOV. 28 - DEC. 2, 1994, Bd. 2, 28. November 1994, Seiten 1259-1263, XP000488736 INSTITUTE OF ELECTRICAL AND ELECTRONICS ENGINEERS
- MIZUNO O ET AL: "SERVICE SPECIFICATION DESCRIPTION AND SERVICE LOGIC PROGRAM GENERATION FOR INTELLIGENT NETWORKS" INTELLIGENT NETWORKS: THE PATH TO GLOBAL NETWORKING, PROCEEDINGS OF THE INTERNATIONAL COUNCIL FOR COMPUTER COMMUNICATION INTELLIGENT NETWORKS CONFERENCE, TAMPA, MAY 4 - 6, 1992, 4. Mai 1992, Seiten 430-440, XP000684038 BAYLISS P W (ED )
- CAMBRE E: "SERVICE MANAGEMENT IN INTELLIGENT NETWORKS" INTELLIGENT NETWORKS: THE PATH TO GLOBAL NETWORKING, PROCEEDINGS OF THE INTERNATIONAL COUNCIL FOR COMPUTER COMMUNICATION INTELLIGENT NETWORKS CONFERENCE, TAMPA, MAY 4 - 6, 1992, 4. Mai 1992, Seiten 420-429, XP000684037 BAYLISS P W (ED )
- PENNANEC'H J C: "INTELLIGENT NETWORK SOFTWARE FACTORY FOR SERVICE CREATION AND MODIFICATION" ELECTRICAL COMMUNICATION, Bd. 63, Nr. 4, 1. Januar 1989, Seiten 345-355, XP000115654
- NIITSU Y ET AL: "DESIGN OF AN INTEGRATED SERVICE CREATION ENVIRONMENT FOR THE ADVANCED INTELLIGENT NETWORK" GLOBECOM '95. IEEE GLOBAL TELECOMMUNICATIONS CONFERENCE, SINGAPORE, NOV. 14 - 16, 1995, Bd. 2, 14. November 1995, Seiten 1277-1281, XP000622993 INSTITUTE OF ELECTRICAL AND ELECTRONICS ENGINEERS

## Beschreibung

Die vorliegende Erfindung betrifft ein Verfahren zur Einrichtung und/oder Bearbeitung eines Dienstes eines intelligenten Netzes, welches von einem Netzbetreiber betreut wird und welches ein eigentlichen Telekommunikationsnetz, zumindest eine für die Ausführung der Dienste des intelligenten Netzes eingerichteten Dienstbetriebsstation und zumindest eine der Dienstbetriebsstation(en) zugeordneten Dienstverwaltungsstation aufweist, bei welchem
a)der Netzbetreiber auf den Auftrag eines Dienstanbieters hin eine Definition des Dienstes erstellt bzw. bearbeitet,
b)der Netzbetreiber diese Dienstdefinition auf der Dienstverwaltungsstation in Dienstfunktionen und Dienstdatenprototypen konvertiert, wobei die Dienstfunktionen die vom Dienst auszuführenden Prozeduren darstellen und diese Prototypen zur Beschreibung der von den Dienstfunktionen verwendeten Daten dienen,
c)der Netzbetreiber den Dienst unter Verwendung der Dienstfunktionen und Prototypen auf dem intelligenten Netz vorbereitet,
d)der Dienstanbieter von einem Terminal aus über eine zu der Dienstverwaltungsstation hergestellte Verbindung zu jedem der Prototypen zumindest eine Dienstdateninstanz erzeugt, wobei diese Instanz die von den Dienstfunktionen verwendeten Daten enthält,
e)der Dienstanbieter aus den Instanzen zumindest eine für die Aktivierung bzw. Aktualisierung des Dienstes auswählt und
f)der Dienstanbieter den Dienst unter Verwendung der Dienstfunktionen und der vom Dienstanwender ausgewählten Instanzen aktiviert bzw. aktualisiert.

Ebenso betrifft die Erfindung ein Verfahren zur Erzeugung von Dienstdatenprototypen, welche zur Beschreibung der in einem Telekommunikationsdienst eines intelligenten Netzes verwendeten Daten dienen.

Auf einem intelligenten Netz können Dienste eingerichtet werden, die ein über das Telekommunikationsnetz geführtes Service des Dienstanbieters für andere Teilnehmer des intelligenten Netzes darstellen; diese Teilnehmer werden durch den Gebrauch des Dienstes zu Dienstteilnehmern. Typische Beispiele solcher Dienste sind etwa: Universelle Rufnummern wie eine Notrufnummer, bei welcher der anrufende Dienstteilnehmer je nach Anruferstandort zu der zuständigen Notrufstelle weitergeleitet wird; ein Wetterauskunftsdienst, der regelmäßig aktualisiert werden muß und unter Umständen auch regional, wieder mit Bezug auf den Anruferstandort, aufgegliedert sein kann; oder ein Informationsdienst, bei dem der Dienstteilnehmer je nach der gewünschten Art der Information zu verschiedenen Büros vermittelt wird, und diese Vermittlung automatisch im Dialog zwischen dem Teilnehmer über Ansagen gestellte Fragen und als beispielsweise Wählsignale erfolgende Antworten des Teilnehmers durchgeführt wird. In diesen Beispielen bewegt sich der Dienst in einer von Seiten des Dienstteilnehmers aus hergestellten Verbindung, der Dienstteilnehmer kann jedoch auch angerufener Teilnehmer sein, wie etwa bei einem Nachrichtenservice, der z.B. elektronische Post an den Dienstteilnehmer weiterleitet, wobei in diesem Falle das Endgerät des Dienstteilnehmers ein Computer mit Modem anstelle eines Telefongerätes ist.

Der Dienstanbieter muß im Gegensatz zum Dienstteilnehmer im allgemeinen kein Teilnehmer des Telekommunikationsnetzes sein; dies verdeutlicht das Beispiel eines Wetterdienstes, der lediglich aus gesprochenen Texten besteht und für den der Text der Ansagen vom Dienstanbieter, einem meteorologischen Institut, dem Netzbetreiber auch ohne Verwendung des Telekommunikationsnetzes, z.B. auf einem Tonträger, übermittelt werden kann. Weiters schließt die hier getroffene Unterscheidung zwischen dem Netzbetreiber als Betreuer des intelligenten Netzes einerseits und dem Dienstanbieter als Betreiber des Dienstes andererseits den Fall nicht aus, daß der Dienstanbieter selbst der Netzbetreiber ist; tatsächlich kann ein Netzbetreiber auch Dienste in eigener Sache auf dem von ihm unterhaltenen Netz anbieten. Die hier besprochenen Telekommunikationsnetze können jeglicher Art sein, z.B. auch Funknetze wie das GSM-Netz.

Für die Ausführung der Dienste weist das intelligente Netz eine oder mehrere Dienstbetriebsstationen ('service control point', SCP) auf, die sämtliche für den Betrieb der Dienste nötigen Informationen und Geräte aufweisen und auf die Daten des Telekommunikationsnetzes, wie z.B. den Rufnummernplan, Zugriff haben. Der Zugang zu den Dienstbetriebsstationen, etwa zur Wartung von Diensten, findet über Dienstverwaltungsstationen ('service management point', SMP) statt, die gewöhnlich von den Dienstbetriebsstationen unabhängige Einheiten darstellen; jedoch können in besonderen Fällen die Funktionen beider Stationen auch von einer Vorrichtung übernommen werden. Die Gesamtheit der Dienstverwaltungs- und -betriebsstationen wird im Zusammenhang mit der Erfindung als Netzsteuerstation bezeichnet.

Ein Dienst auf einem intelligenten Netz wird auf einen Auftrag des Dienstanbieters hin von dem Netzbetreiber angelegt und vorkonfiguriert; danach paßt der Dienstanbieter den Dienst nach seinen Erfordernissen, jedoch innerhalb der seitens des Netzbetreibers vorgegebenen Möglichkeiten, an. Falls die Änderungswünsche des Dienstanbieters über den vom Netzbetreiber vorgegebenen Rahmen hinausgehen, muß der Dienst vom Netzbetreiber überarbeitet oder gänzlich neu erstellt werden.

Unter Anpassung eines Dienstes werden hier diejenigen Tätigkeiten zur Bearbeitung eines Dienstes verstanden, die seitens des Dienstanbieters unternommenen werden, während die dienstbezogenen Tätigkeiten des Netzbetreibers unter der Bezeichnung der Dienstverwaltung zusammengefaßt werden. Für die eingangs beschriebenen Verfahrensschritte bedeutet dies, daß Schritte a) bis c), also die Erstellung bzw. Bearbeitung der Dienstdefinition, die Konversion dieser in Dienstfunktionen und Dienstdatenprotoypen und die Vorbereitung des Dienstes auf dem Telekommunikationsnetz, zur Verwaltung des Dienstes zählen, wogegen Schritte d) bis f), nämlich die Erzeugung der Dienstdateninstanzen aus den Dienstdatenprototypen, die Auswahl von Dienstdateninstanzen für die Aktivierung bzw. Aktualisierung des Dienstes sowie die Aktivierung eines neuen Dienstes bzw. Aktualisierung eines bestehenden Dienstes, die Anpassung eines Dienstes ausmachen.

In besonderen Fällen kann auch ein Dienstteilnehmer anstelle des Dienstanbieters einen Dienst anpassen. Der Dienstteilnehmer ist in solchen Fällen seitens des Dienstanbieters, in seltenen Fällen auch des Netzbetreibers, zur Dienstanpassung autorisiert worden, wobei die Autorisierung auch spezifiziert, inwieweit der jeweilige Dienstteilnehmer die Merkmale eines Dienstes verändern kann. Die Autorisierung des Dienstteilnehmers zur Anpassung kann ausdrücklich erfolgen oder implizit, etwa durch die Mitteilung der Zugangsmöglichkeit zur Netzsteuerstation an den Dienstteilnehmer. Wenn im folgenden von der Dienstanpassung durch den Dienstanbieter die Rede ist, ist daher stets die Möglichkeit stillschweigend mit eingeschlossen, daß ein Dienstteilnehmer anstelle des Dienstanbieters den Dienst anpaßt.

Der Einfachheit halber werden im folgenden die Dienstdatenprototypen und Dienstdateninstanzen kurz Prototypen bzw. Instanzen genannt.

Für die Dienstverwaltung und Dienstanpassung stehen dem Netzbetreiber bzw. dem Dienstanbieter verschiedene Werkzeuge zur Verfügung, die üblicherweise als auf der Datenverwaltungsstation oder dem Dienstanbieter-Terminal ablaufende Computerprogramme vorliegen. Ebenso werden die Dienstfunktionen, Prototypen und Instanzen gewöhnlich als Dateien repräsentiert, die auf der Dienstverwaltungsstation angelegt werden; meist gilt dies auch für die Dienstdefinitionen, soweit diese überhaupt in konkreter Form und nicht nur als gedachtes Konzept vorliegen.

Bisherige Lösungen für die Einrichtung von Telekommunikationsdiensten sahen vor, daß der Netzbetreiber die Dienstdefinition auf die Dienstverwaltungsstation lädt und dort mit einem Dienst-Compiler in mehrere Datenobjekte, darunter die Prototypen, überträgt. Für die weitere Bearbeitung sind weitere Bedienwerkzeuge vorgesehen, die es ermöglichen, bestimmte dem Telekommunikationsdienst zugeordnete Daten und Parameter zu wählen bzw. einzustellen. Für das Erstellen und Beschreiben von Dienst-Benutzer-Berechtigungen, für die Zugriffsautorisierung von Datenobjekten und für die Erstellung und Bearbeitung von Rufnummernplänen steht dem Netzbetreiber ein Dienstverwaltungs-Werkzeug zur Verfügung. Der Verwaltung der vom Dienstanbieter zu liefernden Daten der Handhabung von statistischen Daten durch den Dienstanbieter dient ein eigenes Werkzeug, die Dienstanpassung (CSC, 'customer service control'), die der Netzbetreiber dem Dienstanbieter zur Verfügung stellen muß. Die Dienstanpassung wird auf einem Rechner des Dienstanbieters betrieben, der im Regelfall von der Dienstverwaltungsstation unabhängig ist und im allgemeinen ein abweichendes Computersystem verwendet. Der Netzbetreiber muß also die Version der Dienstanpassung, die er dem Dienstanbieter zur Verfügung stellt, auf das spezielle System des Dienstanbieters einstellen. Diese Dienstanpassung ist daher auf der Dienstverwaltungsstation meist nicht ausführbar; für die Erstellung der Dienstanpassung muß der Netzbetreiber eigens eine entsprechende, dem System der Dienstverwaltungsstation fremde Systemumgebung schaffen. Da die verschiedenen Dienstanbieter im allgemeinen auch verschiedenartige Computersysteme verwenden, stellt dies für den Netzbetreibers sehr hohe Anforderungen hinsichtlich Systemresourcen und -konfiguration sowie Flexibilität. Außerdem bedarf es natürlich, je nach Gestaltung und Aufwand der Bedienoberfläche der Dienstanpassung, eingehender Kenntnisse der betreffenden Computersysteme. Weiters müssen die Prototypen und Instanzen zwischen dem Rechner des Dienstanbieters und der Dienstverwaltungsstation ausgetauscht werden, sei es über Datenträger wie Floppy-Disketten, oder über eine Verbindung etwa mittels einer Modem-Leitung. Nur für Textdateien ist die Übertragung zwischen verschiedenen Systemen jedenfalls unproblematisch. Bisher beschränkte man sich daher einerseits auf ein reines Textformat für die Prototypen und Instanzen, andererseits auf einfach gehaltene Programme der Dienstanpassung. Für den Dienstanbieter brachte das eine spröde Bedienoberfläche der Dienstanpassung mit sich, mit einer unübersichtlichen und oft unanschaulichen Darstellung der Dienstdaten.

Eine solche Lösung ist zum Beispiel im Dokument XP 000 488 736 "Methodology and tools for intelligent network specification" 28 November 1994 angegeben.

Es ist daher eine Aufgabe der vorliegenden Erfindung, ein Verfahren zur Einrichtung bzw. Bearbeitung von Telekommunikationsdiensten zu liefern, das es auf einfache und einheitliche Weise ermöglicht, auf Informationen zuzugreifen, die einen Ablauf von Diensten charakterisieren, und diese zu bearbeiten. Hierbei sollen diese Informationen nach Möglichkeit auch über ein in Textformat gehaltene Daten hinausgehen. Es ist eine weitere Aufgabe der vorliegenden Erfindung, die Übertragung von Daten zwischen den beteiligten Rechnerstationen zu vereinfachen.

Diese Aufgaben werden ausgehend von einem Verfahren zur Einrichtung und/oder Bearbeitung von Diensten der eingangs beschriebenen Art mittels eines Verfahrens gelöst, bei welchem erfindungsgemäß für einige Prototypen, zumindest aber einen, ein Datenformat gewählt wird, das die Aufnahme von sowohl Text als auch Anweisungscodes in einem textverträglichen Format, z.B. als symbolische Befehle, gestattet, die in dem gewählten Datenformat dargestellten Markup-Prototypen mit Anweisungscodes ausgestattet werden, welche der Erzeugung von Instanzen dienen, der Inhalt zumindest eines Markup-Prototyps auf dem Terminal des Dienstanbieters angezeigt wird und der Dienstanbieter die Instanzen dadurch erzeugt, daß er über auf seinem Terminal eingegebene Befehle aus den Anweisungscodes der angezeigten Markup-Prototypen zumindest einen geeigneten auswählt und ablaufen läßt.

Diese Lösung bringt den Vorteil, daß der Dienstanbieter anstelle des Dienstanpassungsprogrammes ein einfaches Programm, z.B. eine mit einem Interpreter der Prototypen-Anweisungscodes verbundene Textausgabe, verwenden kann. Solche Programme, die z.B. in Textverarbeitungssystemen verwendet werden, sind an sich bekannt und werden für vielerlei Computersysteme angeboten, jedoch nur im Zusammenhang mit der Bearbeitung und Bereitstellung von Informationen von Publikationen oder ähnlichem. Da die Anweisungscodes der Prototypen in einem textverträglichen Format abgelegt sind, kann für die Übertragung der Prototypen zwischen verschiedenen Computersystemen auf bereits bekannte, einfache Verfahren für Textdaten zurückgegriffen werden.

In einer bevorzugten Ausführungsform, die sich durch besondere Anschaulichkeit der Dienstbearbeitung auszeichnet, wird eine graphische Struktur, die der logischen Struktur des Dienstes entspricht, bei der Erstellung bzw. Bearbeitung oder Konversion der Dienstdefinition seitens des Netzbetreibers erzeugt und mit Hilfe der textverträglichen Anweisungscodes in einem Markup-Prototyp abgelegt.

Es ist dabei weiters für den Dienstanbieter besonders anschaulich, wenn die graphische Struktur bei der Erzeugung oder Auswahl der Instanzen auf dem Terminal des Dienstanbieters dargestellt wird.

In einer vorteilhaften Variante, die den Aufwand bei der Durchführung des Verfahrens deutlich verringert, wird ein Dienst dadurch definiert, daß der Netzbetreiber eine Anzahl vordefinierter Dienstbausteine auswählt und die Verknüpfung dieser Dienstbausteine untereinander und mit den Komponenten des intelligenten Netzes festlegt.

Es ist dabei in der Praxis günstig und zweckmäßig, wenn funktionell zusammengehörige Dienstbausteine zu Gruppen zusammengefaßt werden und jeder Gruppe zumindest ein Objekt der graphischen Struktur zugeordnet wird.

In einer besonders vorteilhaften Ausführungsform wird bei der Erzeugung der Instanzen der Dienstanbieter zur Eingabe von Daten aufgefordert, die für die Erzeugung der Instanzen verwendet werden.

Dabei dient es der Übersichtlichkeit des Verfahrens, besonders für den Dienstanbieter, wenn dieser dazu aufgefordert wird, Parameter von Dienstbausteinen einzugeben, und dies mit Hilfe von Formularen erfolgt, welche jeweils einem Objekt der graphischen Struktur zugeordnet sind und zur Eingabe von Parametern jeweils jener Dienstbausteine dienen, welche durch das einem Formular entsprechende Objekt repräsentiert werden.

Es ist dabei weiters günstig, wenn der Dienstanbieter die Eingabeaufforderung durch einen spezifischen Befehl auslöst, z.B. durch Auswählen eines Anweisungscodes oder durch Anklikken eines graphischen Elementes, dem ein Eingabeformular zugeordnet ist.

In einer in der Praxis besonders vorteilhaften Ausführungsform wird für das Datenformat der Markup-Prototypen eine Markup-Sprache, z.B. HTML, verwendet und der Markup-Prototyp dem Dienstanbieter mit Hilfe eines für die Markup-Sprache geeigneten Browser-Programmes angezeigt.

Eine weitere günstige Variante erbringt den Vorteil, daß das erfindungsgemäße Verfahren von praktisch beliebigem Ort aus durchgeführt werden kann, dadurch, daß der die Verbindung vom Terminal des Dienstanbieters zu der Dienstverwaltungsstation über ein frei zugängliches Computernetz hergestellt wird.

In einer der Sicherheit der Dienstverwaltungsstation zuträglichen Variante wird die Verbindung von dem Terminal des Dienstanbieters zu der Dienstverwaltungstation über einen der Dienstverwaltungsstation zugeordneten Brandmauer-Rechner hergestellt.

In einer weiteren aus Gründen der Datensicherheit günstigen Variante wird dem Dienstanbieter der Zugang auf die Dienstverwaltungsstation bzw. der Zugriff auf die Prototypen erst nach Eingabe einer Autorisierung, z.B. eines PIN-Code oder einer Transaktions-Identifikationsnummer, gestattet.

Es ist weiters besonders vorteilhaft im Sinne einer Verringerung des Verfahrensaufwandes, wenn der Netzbetreiber für das Erstellen bzw. Bearbeiten der Dienstdefinition ein Definitionswerkzeug der Dienstverwaltungsstation verwendet.

Es ist ebenso vorteilhaft im Sinne einer Verringerung des Verfahrensaufwandes, wenn der Netzbetreiber für das Konvertieren der Dienstdefinition ein Compilerwerkzeug der Dienstverwaltungsstation verwendet.

Weiter wird das Verfahren durch die günstige Variante vereinfacht, bei dem der Netzbetreiber den Dienst auf dem Telekommunikationsnetz mit Hilfe eines Verwaltungswerkzeuges vorbereitet.

Eine andere vorteilhafte Ausführungsform, welche die flexible Handhabung von Diensten vereinfacht, gestattet es, daß die Erzeugung der Instanzen und/oder die Auswahl der Instanzen und/oder die Aktivierung bzw. Aktualisierung des Dienstes von einem Dienstteilnehmer durchgeführt wird, der hierfür von dem Dienstanbieter und/oder dem Netzbetreiber autorisiert wurde.

Die weiter oben dargestellten Aufgaben werden weiters ausgehend von einem Verfahren zur Erzeugung von Dienstdatenprototypen mittels eines Verfahrens der eingangs beschriebenen Art gelöst, bei welchem erfindungsgemäß für die Prototypen ein Datenformat gewählt wird, das die Aufnahme von sowohl Text als auch Anweisungscodes in einem textverträglichen Format, z.B. als symbolische Befehle, gestattet und die Prototypen mit Anweisungscodes ausgestattet werden, welche der Erzeugung von Dienstdateninstanzen dienen, wobei die Instanzen die in einem Telekommunikationsdienst eines intelligenten Netzes verwendeten Daten enthalten.

Auch diese Lösung bringt den Vorteil, daß der Dienstanbieter anstelle des Dienstanpassungsprogrammes ein einfaches und weniger spezifisches Programm, z.B. eine mit einem Interpreter der Prototypen-Anweisungscodes verbundene Textausgabe, verwenden kann. Die mit Anweisungscodes ausgestatteten Prototypen können nun Aufgaben des Dienstanpassungsprogrammes übernehmen, was den Aufwand seitens des Dienstanbieters und des Netzbetreibers verringert.

In einer bevorzugten Ausführungsform, die sich durch besondere Anschaulichkeit der Dienstbearbeitung auszeichnet, wird eine graphische Struktur, die der logischen Struktur des Dienstes entspricht, erzeugt und mit Hilfe von textverträglichen Anweisungscodes in einem Prototyp abgelegt.

In einer vorteilhaften Variante wird der Aufwand bei der Durchführung des Verfahrens dadurch deutlich verringert, daß ein Dienst durch Auswählen einer Anzahl vordefinierter Dienstbausteine und Festlegen der Verknüpfung dieser Dienstbausteine untereinander und mit den Komponenten des intelligenten Netzes definiert, funktionell zusammengehörige Dienstbausteine zu Gruppen zusammengefaßt und jeder Gruppe zumindest ein Objekt der graphischen Struktur zugeordnet werden.

In einer in der Praxis besonders vorteilhaften Ausführungsform wird für das Datenformat der Prototypen eine Markup-Sprache, z.B. HTML, verwendet.

In einer besonders vorteilhaften Variante, die sich durch leichte Bedienbarkeit seitens des Anwenders, d.h. des Dienstanbieters und/oder -teilnehmers, auszeichnet, werden die Dienstdateninstanzen mit Hilfe obiger Dienstdatenprototypen dadurch erzeugt, daß der Inhalt zumindest eines Prototyps auf dem Terminal des Anwenders angezeigt wird und der Anwender die Instanzen dadurch erzeugt, daß er über auf seinem Terminal eingegebene Befehle aus den Anweisungscodes des zumindest einen angezeigten Prototyps zumindest einen geeigneten auswählt und ablaufen läßt.

Es ist dabei weiters für den Anwender besonders anschaulich, wenn die in den Prototypen abgelegte graphische Struktur auf einem Terminal des Anwenders dargestellt wird.

In einer besonders vorteilhaften Ausführungsvariante wird der Anwender zur Eingabe von Daten aufgefordert, die für die Erzeugung der Instanzen verwendet werden.

Dabei dient es der Übersichtlichkeit für den Anwender, wenn dieser dazu aufgefordert wird, Parameter von Dienstbausteinen einzugeben, und dies mit Hilfe von Formularen erfolgt, welche jeweils einem Objekt der graphischen Struktur zugeordnet sind und zur Eingabe von Parametern jeweils jener Dienstbausteine dienen, welche durch das einem Formular entsprechende Objekt repräsentiert werden.

Es ist in diesem Falle weiters günstig, wenn der Anwender die Eingabeaufforderung durch einen spezifischen Befehl auslöst, z.B. durch Auswählen eines Anweisungscodes oder durch Anklikken eines graphischen Elementes, dem ein Eingabeformular zugeordnet ist.

In einer in der Praxis besonders vorteilhaften Ausführungsvariante wird der Prototyp dem Anwender mit Hilfe eines für die Markup-Sprache geeigneten Browser-Programmes angezeigt.

In einer weiteren günstigen Ausführungsform, bei der die Erzeugung der Instanzen von praktisch beliebigem Ort aus durchgeführt werden kann, tätigt der Anwender dies von einem mit der Dienstverwaltungsstation des intelligenten Netzes über ein frei zugängliches Computernetz verbundenen Terminal aus.

In einer der Sicherheit der Dienstverwaltungsstation wegen günstige Ausführungsform wird die Verbindung von dem Terminal des Anwenders zu der Dienstverwaltungstation über einen der Dienstverwaltungsstation zugeordneten Brandmauer-Rechner hergestellt.

Ebenso günstig für die Datensicherheit ist es, wenn dem Anwender der Zugang auf die Dienstverwaltungsstation bzw. der Zugriff auf die Prototypen erst nach Eingabe einer Autorisierung, z.B. eines PIN-Code oder einer Transaktions-Identifikationsnummer, gestattet wird.

Im folgenden wird die Erfindung anhand eines Ausführungsbeispieles, das die Anpassung von Diensten für ein Intelligentes Netz über das Internet betrifft, näher erläutert. Hierzu werden auch die beigefügten Figuren verwendet, wobei
Fig. 1 den prinzipiellen Aufbau des Intelligenten Netzes darstellt, und
Fig. 2 die Komponenten der Netzsteuerstation mit den der Dienstverwaltungsstation zugehörigen Datenobjekten zeigt.

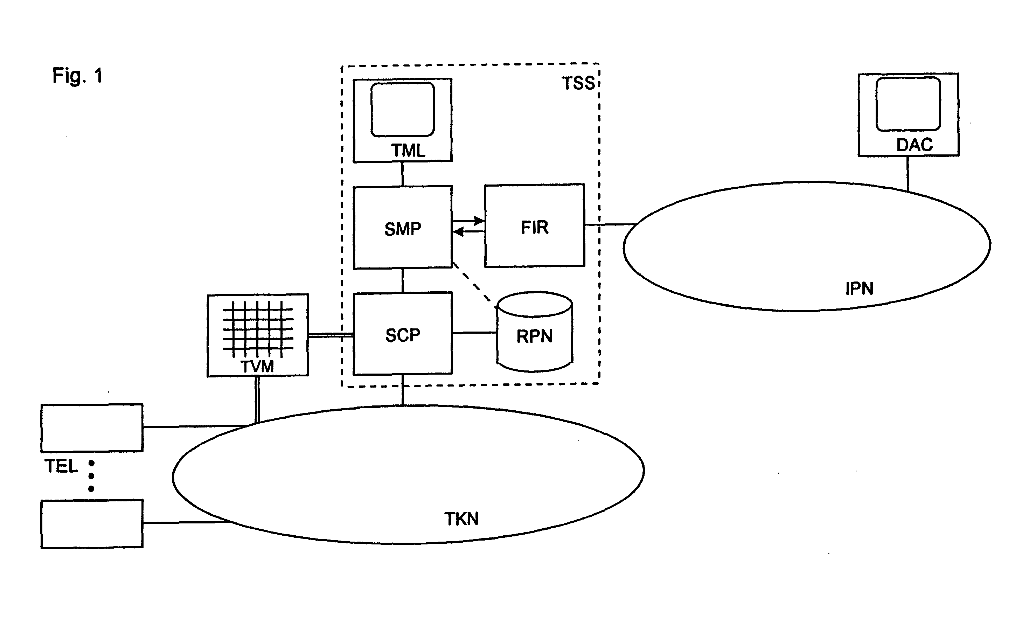

Das Intelligente Telekommunikationsnetz der Fig. 1 besteht aus dem eigentlichen Telekommunikationsnetz TKN, an das mehrere Teilnehmer TEL angeschlossen sind, sowie der Vermittlung TVM des Telekommunikationsnetzes und der Netzsteuerstation TSS für die Dienste des Intelligenten Telekommunikationsnetzes. In anderen Realisierungen eines intelligenten Netzes können auch mehrere Vermittlungen vorgesehen sein; auch kann die Netzsteuerstation TSS dezentral auf mehrere Standorte aufgeteilt sein. Die Netzsteuerstation TSS besteht aus der Dienstbetriebsstation SCP ('service control point'), der Dienstverwaltungsstation SMP ('service management point') sowie verschiedenen Geräten, die als Peripherie der Dienstverwaltungsstation dienen. Zu letzteren zählen im besonderen zumindest ein Terminal TML, das dem Netzbetreiber den Zugang zur Dienstverwaltungsstation SMP zum Zwecke der Dienstverwaltung bietet, Datenbanken wie der Rufnummernplan RPN, auf die auch die Vermittlung TVM direkt oder indirekt über die Dienstbetriebsstation SCP zugreift, sowie ein Brandmauer-Rechner FIR ('firewall computer'), der als Verbindungsstelle zwischen der Netzsteuerstation TSS und dem Internet IPN dient.

Der Brandmauer-Rechner FIR dient zum Schutz der Dienstverwaltungsstation SMP vor unerlaubten Zugriffen aus dem Internet. Brandmauer-Rechner oder 'firewalls' sind ein bekanntes Konzept zur Sicherung von Computernetzen. Hier übernimmt der Brandmauer-Rechner sämtliche Funktionen eines Internet-Servers für die Anpassung von Diensten und entlastet somit die eigentliche Dienstverwaltungsstation SMP von diesen Aufgaben. Wenn ein Dienstanbieter einen seiner Dienste anpassen will, meldet er sich bei der Netzsteuerstation TSS über den Brandmauer-Rechner FIR an, und die Bearbeitung der Prototypen und Instanzen erfolgt beispielsweise nach dem Client-Server-Prinzip zwischen dem Brandmauer-Rechner FIR und dem Terminal DAC des Dienstanbieters, welches typischerweise ein PC mit Internet-Software ist. Der Brandmauer-Rechner FIR bezieht die dienstbezogenen Dateien von der Dienstverwaltungsstation SMP und liefert gegebenenfalls geänderte Versionen dieser Daten an die Dienstverwaltungsstation zurück; der Datenverkehr zwischen diesen Rechnern ist jedoch auf diese Dateien beschränkt. Für den Dienstanbieter freilich ist, wenn er von seinem am Internet angeschlossenen Terminalrechner DAC aus Dienste anpaßt, der Brandmauer-Rechner FIR transparent und somit kein Unterschied zu erkennen, ob er die Anpassung an der Dienstverwaltungsstation SMP direkt oder über einen Brandmauer-Rechner ausführt.

Die Erfindung ermöglicht es, Daten über ein externes Medium zugänglich zu machen, die einem geschlossenen Steuerungssystem für Telekommunikationsdienste entstammen. Durch die Anbindung an ein bestehendes Computernetz wie das Internet erhält der Dienstanbieter Zugang zur Anpassung des Dienstes von jedem beliebigen Computerplatz aus, der an dieses Computernetz angeschlossen ist; im Falle des Internet etwa bedeutet dies eine weltweite Zugangsmöglichkeit.

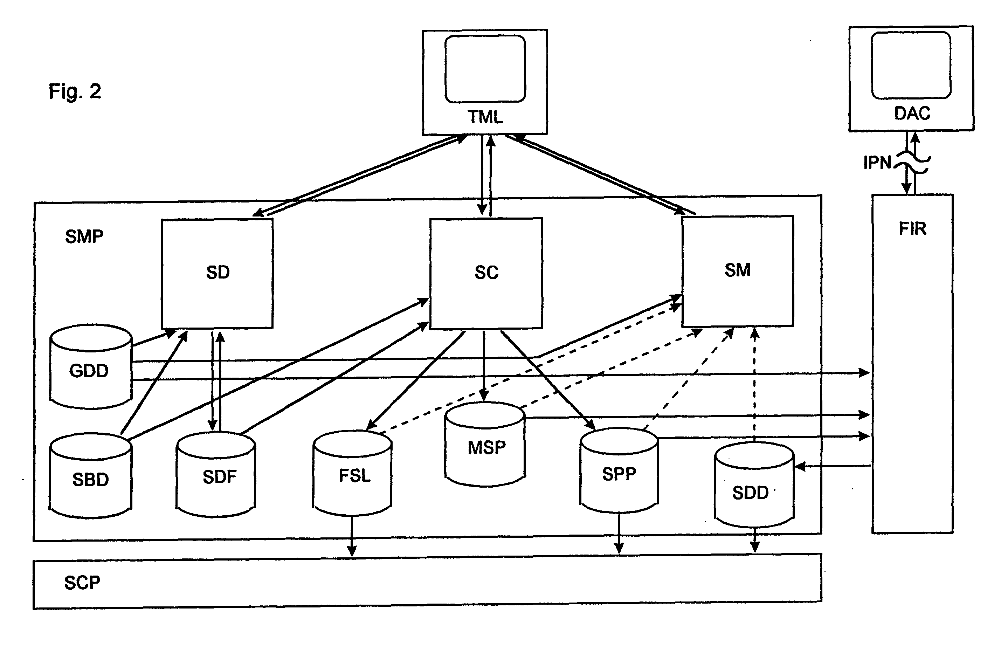

Die Komponenten, Anwendungen und Dateien der Netzsteuerstation TSS sind, soweit sie für die Erfindung von Belang sind, in Fig. 2 dargestellt. Um einen Dienst zu definieren, verwendet der Netzbetreiber ein Definitionswerkzeug SD ('service definition') der Dienstverwaltungsstation, mit der er über ein Terminal TML der Dienstverwaltungsstation SMP kommuniziert. Weiters stehen ihm ein Satz von Dienstbausteinen zur Verfügung, die als SIBs ('system independent building blocks') bezeichnet werden und elementare Aufgaben eines Dienstablaufs ausführen, z.B. die Ausgabe einer Textansage oder die Abfrage der aktuellen Zeit, sowie "globale" Daten allgemeiner Natur, wie z.B. Standardansagen oder Tarifpläne. Die Dienstbausteine und die globalen Daten sind in eigenen Datenbanken SBD und GDD der Dienstverwaltungsstation abgespeichert. Der Netzbetreiber wählt nun die für den Dienst jeweils benötigten Dienstbausteine aus und ordnet sie nach Art eines Ablaufdiagrammes zueinander an. Hierbei können auch Verzweigungen programmiert werden, nämlich mittels entsprechender Verzweigungs-SIBs, die von verschiedenen Parametern abhängig gemacht werden können, wie z.B. von dem Anruferstandort bzw. der Ortskennzahl des Anrufenden oder von durch den Anrufenden zu tätigenden Eingaben. Diese Anordnung von Dienstbausteinen in Form eines Ablaufs bildet die Dienstdefinition, welche bei Bedarf als eigenes Datenobjekt SDF abgespeichert werden kann.

Die Dienstdefinition ist symbolischer Natur, vergleichbar einem Algorithmus oder einem Programm einer höheren Programmiersprache. Weiters enthalten die Dienstbausteine der Dienstdefinition im allgemeinen Parameter, die vom Dienstanbieter anzupassen sind und vom Netzbetreiber frei gelassen oder vorkonfiguriert werden, z.B. einen Auskunftstext. Aus diesen Gründen kann die Dienstdefinition nicht direkt für die Ausführung des Dienstes verwendet werden. Statt dessen wird die Dienstdefinition SDF an ein Compilerwerkzeug SC ('service compiler') der Dienstverwaltungsstation SMP übergeben und von diesem Compilerwerkzeug SC in Dienstfunktionen FSL und Dienstdatenprototypen SPP, kurz als Prototypen bezeichnet, konvertiert. Die Dienstfunktionen FSL ('flexible service logic') enthalten die Abläufe des Dienstes in prozeduraler Form, bedürfen jedoch noch der vom Dienstanbieter zu liefernden Daten, deren Typ und Format in den Prototypen definiert sind. Freilich kann der Netzbetreiber schon zu diesem Zeitpunkt den Dienst auf dem Telekommunikationsnetz vorbereiten. Hierzu gehört die Bearbeitung der Rufnummernpläne, z.B. die Einrichtung einer Universellen Rufnummer, und die Erstellung und Beschreibung von Dienst-Benutzer-Berechtigungen. Dies führt der Netzbetreiber mit Hilfe des Verwaltungswerkzeuges SM ('service management') unter Zuhilfenahme der genannten Datenobjekte der Dienstverwaltungsstation SMP durch. Unter Umständen kann der Dienst bereits mit vorkonfigurierten Daten als provisorische Version aktiviert werden.

Die vom Dienstanbieter anzupassenden Dienstdaten müssen nun vom Dienstanbieter geliefert werden. Dies geschieht in Form der Dienstdateninstanzen SDD, kurz als Instanzen bezeichnet. Die in einer Instanz enthaltenen Daten sind hinsichtlich Typ und Format durch den zugrundeliegenden Prototyp SPP festgelegt, vergleichbar mit einem formellen Text, dessen Gestalt durch ein Formular festgelegt ist.

Bei dem Beispiel der Dienstanpassung auf einem intelligenten Telekommunikationsnetz wird dem Dienstanbieter eine symbolische Darstellung des Dienstablaufes gezeigt. Da die Dienstdefinition in allgemeinen mehr Informationen enthält, als von dem Dienstanbieter bei der Anpassung des Dienstes eingestellt werden kann und gewöhnlich auch für diesen interessant ist, sieht die Erfindung vor, dem Dienstanbieter eine vereinfachte, graphische Darstellung zu präsentieren. Diese graphische Präsentation des Dienstablaufes erzeugt der Netzbetreiber bei der Erstellung der Dienstdefinition mit Hilfe des Definitionswerkzeuges SD. Alternativ dazu ist es auch denkbar, die graphische Präsentation erst beim Konvertieren in die Prototypen zu erstellen. Der Netzbetreiber faßt hierzu jeweils funktionell zusammengehörige Dienstbausteine zu einer Gruppe zusammen und erzeugt dazu ein graphisches Objekt, das diese Gruppe in der graphischen Repräsentation vertritt. Einem graphischen Objekt wird auch ein Satz von seitens des Dienstanbieters anzupassenden Parametern zugeordnet, und zwar die Parameter jener Dienstbausteine, die der von dem Objekt vertreten Dienstbaustein-Gruppe angehören. Zu jedem graphischen Objekt gehören weiters ein oder mehrere Formulare, über die die Eingabe der dem Objekt zugeordneten Dienstdaten erfolgt. Die graphische Repräsentation wird gemeinsam mit den übrigen Datenformaten bei der Konversion der Datendefinition durch den Dienstcompiler SD in eigenen Markup-Prototypen MSP abgelegt, die zusätzlich zu den Dienst-Prototypen SPP erzeugt werden und über die dann bei der Anpassung des Dienstes durch den Dienstanbieter die graphische Repräsentation zugänglich wird. Es wäre natürlich auch möglich, die Information der Markup-Prototypen MSP direkt in den Prototypen SPP abzulegen; dies ist jedoch in der Praxis wegen der Größe der behandelten Datenmengen nicht ratsam. Gewöhnlich wird jedem Dienst-Prototyp SPP ein Markup-Prototyp MSP zugeordnet; jedoch muß diese Zuordnung nicht eindeutig sein, da in besonderen Fällen auch einem Markup-Prototyp MSP mehrere Dienst-Prototypen SPP zukommen können und umgekehrt.

In einzelnen Fällen kann es auch vorkommen, daß die Dienstbaustein-Gruppen überlappen, sodaß ein Dienstbaustein in mehr als einem graphischen Objekt vertreten ist. Häufiger kommt es vor, daß einer Dienstbaustein-Gruppe mehrere Objekte zugeordnet sind, z.B. aus Gründen der Übersichtlichkeit der graphischen Struktur. Freilich kann eine Dienstbaustein-Gruppe auch aus nur einem Dienstbaustein bestehen. In besonderen Fällen kann eine Gruppe leer sein, wenn etwa bei einem besonderen Dienst in einem Ablaufzweig nichts zu tun ist. Auch können Teile des Dienstablaufes, die für den Dienstanbieter belanglos sind, in der graphischen Repräsentation fortgelassen sein. Diese Sonderfälle sind besonders bei der einheitlichen Gestaltung von Dienstfamilien von Bedeutung, oder wenn einem Dienst mehrere Markup-Prototypen angehören.

Um die Aufnahme von Text einerseits und graphischer Information andererseits zu gestatten, sind die Markup-Prototypen MSP als HTML-Dokumente abgefaßt. HTML ('hyper-text markup language') ist ein auf dem Internet, besonders auf dem World-Wide Web, allgemein gebräuchliche Textsatz-Sprache und basiert auf der im ISO 8879-Standard festgelegten 'standard generalized markup language', in der Angaben zur Formatierung von Text, Textstilen, Querbezügen usw. als sogenannte Markups dargestellt werden. Markups sind Befehle in Textform, die an bestimmten Merkmalen, z.B. einem Fluchtsymbol, als Befehle erkennbar sind. Von einem Markup-Text-Interpreter oder -Compiler werden diese Markups in die entsprechenden Merkmale für den übrigen Text umgewandelt. Im Falle des Internet werden die Text-Interpreter, mittels derer ein HTML-Dokument auf einem Bildschirm gezeigt oder ausgedruckt werden kann, als Browser bezeichnet. Graphiken können auf verschiedene Weise in HTML-Dokumenten realisiert werden, z.B. durch Einbettung eines HTML-unabhängigen Bildes, durch Konstruktion mittels graphischer Markups, durch Zusammensetzen und Anordnen von Elementen zu einer Graphik oder durch Kombination dieser Methoden. Markups können auch Befehle enthalten, die interaktiv ausführbar in Form einer Reaktion seitens des HTML-Browsers oder -Servers sind und durch einen spezifischen Befehl des Anwenders - hier des Dienstanbieters - aktiviert werden. Die Aktivierung erfolgt z.B. durch Anklicken auf dem Bildschirm mit Hilfe der Maus. Von besonderer Bedeutung sind die sogenannten Links in HTML-Texten. Diese sind Markups, die meist als im gewöhnlichen Text vorkommende Stichwörter erscheinen und durch z.B. Hervorhebung in einer bestimmten Farbe für den Dienstanbieter als Links erkennbar sind; tatsächlich stellen sie Querverweise zu anderen Stellen desselben Dokuments oder zu anderen HTML-Dokumenten dar. Durch Aktivieren eines Links wird die Textstelle, auf die das Link verweist, angezeigt, wobei gegebenenfalls in ein anderes HTML-Dokument gewechselt wird.

Für die Anpassung eines Dienstes meldet sich der Dienstanbieter von seinem Terminal DAC aus mit Hilfe des auf dem Terminal laufenden Browsers über das Internet bei der Netzsteuerstation TSS an. Der Dienstanbieter muß sich nun zuerst autorisieren, um auf die Dienstdatenobjekte zugreifen zu können. Dies geschieht z.B. durch die Eingabe einer PIN-Nummer oder einer Transaktions-Identifikation. Sämtliche nun folgenden Vorgänge der Dienstanpassung finden mit Hilfe von HTML-Dokumenten statt, wobei der Dienstanbieter seine Befehle durch Aktivieren von Markups oder auf Aufforderung über ein Markup durch Eingabe von Anweisungen gibt. Dem Dienstanbieter werden zu Beginn der Dienstanpassung in einer Übersichtsliste die Dienste darstellt, zu denen der Dienstanbieter Zugriff entsprechend der von ihm eingegebenen Autorisierung hat, sowie die zugeordneten Prototypen und eventuell bereits vorhandene Instanzen. Die Einträge dieser Liste stellen Links zu den jeweiligen Prototypen usf. dar. Der Dienstanbieter wählt nun den Dienst und den Prototypen, den er anpassen möchte, durch Aktivieren des entsprechenden Eintrages aus, woraufhin der so ausgewählte Prototyp mit Hilfe der Markup-Prototypen MSP angezeigt wird. Die Markup-Prototypen MSP liegen je nach ihrem Umfang als eigene HTML-Dokumente vor oder als Abschnitte in einem größeren Dokument, beispielsweise der entsprechend erweiterten Dienst-Übersichtsliste.

Ein von dem Dienstanbieter ausgewählter Dienst-Prototyp SPP wird nun mit Hilfe der graphischen Repräsentation in den Markup-Prototypen MSP dargestellt. Zur Anpassung der Dienstdaten aktiviert der Dienstanbieter jeweils ein graphisches Objekt, woraufhin der Reihe nach die dem graphischen Objekt zugeordneten Formulare erscheinen und der Dienstanbieter die Dienstdaten eingibt bzw. bereits vorhandene ändert. Wenn der Dienstanbieter die Daten eines Dienst-Prototyps in eine für ihn zufriedenstellende Form gebracht hat, schließt er z.B. durch Aktivieren eines "Knopfes", der natürlich auch ein Markup ist, die Anpassung ab, woraufhin vom Markup-Prototyp eine Instanz mit den eingegebenen Daten auf der Netzsteuerstation TSS erzeugt wird. Es ist hierbei anzumerken, daß die Prototypen selbst während der Anpassung des Dienstes durch den Dienstanbieter nicht verändert werden, sondern lediglich als Vorlage und Instrument zur Erzeugung von Instanzen dienen. Mit Hilfe eines anderen "Knopfes" verläßt der Dienstanbieter den Prototypen SPP/MSP und kehrt in die Dienst-Übersichtsliste zurück.

Gewöhnlicherweise gilt die soeben neu erzeugte Instanz als aktuelle Version, die bei der nächsten Aktualisierung des Dienstes berücksichtigt werden soll. Falls der Dienstanbieter jedoch auf eine bereits vorhandene Instanz zurückgreifen will, z.B. um auf einen früheren Informationstext zurückzukehren, so geschieht dies durch Auswahl dieser Instanz in der Dienst-Übersichtsliste. In einer Erweiterung der Erfindung kann der Dienstanbieter auch vorhandene Instanzen dadurch ändern, daß er die zu ändernde Instanz auswählt und dann aktiviert, woraufhin für diese Instanz ein Anpassungsvorgang beginnt. Wenn vom Dienstanbieter gewünscht, können zusätzlich zugehörige Prototypen aufgerufen und die Daten der Instanz als Voreinstellungen verwendet werden, die nun vom Dienstanbieter nach Bedarf geändert werden können. Bei der Beendung der Anpassung wird je nach Anweisung durch den Dienstanbieter die Instanz entweder mit der neuen Version überschrieben oder bleibt neben der neuen Version erhalten.

Nach Abschluß der Dienstanpassungsarbeiten löst der Dienstanbieter die Aktivierung bzw., wenn der Dienst schon besteht, die Aktualisierung des Dienstes aus, etwa durch einen entsprechenden "Knopf". Die Dienstaktivierung bzw. -aktualisierung geschieht dadurch, daß die vom Dienstanbieter als aktuelle Versionen gekennzeichneten Instanzen SDD in der Netzsteuerstation auf die Dienstbetriebsstation SCP übertragen und mit den Dienstfunktionen FSL verknüpft werden. Dieser letzte Schritt erfolgt je nach Konfiguration der Netzsteuerstation TSS automatisch und wird durch das Vorhandensein neuer Instanzversionen ausgelöst, oder er wird explizit durch den Dienstanbieter veranlaßt. Natürlich besteht für den Dienstanbieter auch die Möglichkeit, die Dienstanpassung mittels eines "Storno-Knopfes" rückgängig zu machen. Schließlich verläßt der Dienstanbieter auch die Dienst-Übersichtsliste, wodurch die Verbindung zwischen der Netzsteuerstation TSS und dem Dienstanbieter-Terminal DAC gelöst wird.

Abschließend ist anzumerken, daß die oben angeführten Ausführungsbeispiele nicht die einzigen möglichen Ausgestaltungen der vorliegenden Erfindungen darstellen. Vielmehr betrifft die vorliegende Erfindung sämtliche vom Fachmann realisierbaren Formen, für welche die in den unabhängigen Ansprüchen 1 bzw. 17 genannten Merkmale zutreffen.

## Patentansprüche

1. Verfahren zur Einrichtung und/oder Bearbeitung eines Dienstes eines intelligenten Netzes, welches von einem Netzbetreiber betreut wird und welches ein eigentlichen Telekommunikationsnetz, zumindest eine für die Ausführung der Dienste des intelligenten Netzes eingerichteten Dienstbetriebsstation (SCP) und zumindest eine der Dienstbetriebsstation(en) zugeordneten Dienstverwaltungsstation (SMP) aufweist, bei welchem
a)der Netzbetreiber auf den Auftrag eines Dienstanbieters hin eine Definition des Dienstes erstellt bzw. bearbeitet,
b)der Netzbetreiber diese Dienstdefinition auf der Dienstverwaltungsstation (SMP) in Dienstfunktionen und Dienstdatenprototypen konvertiert, wobei die Dienstfunktionen die vom Dienst auszuführenden Prozeduren darstellen und diese Prototypen zur Beschreibung der von den Dienstfunktionen verwendeten Daten dienen,
c)der Netzbetreiber den Dienst unter Verwendung der Dienstfunktionen und Prototypen auf dem intelligenten Netz vorbereitet,
d)der Dienstanbieter von einem Terminal aus über eine zu der Dienstverwaltungsstation (SMP) hergestellte Verbindung zu jedem der Prototypen zumindest eine Dienstdateninstanz erzeugt, wobei diese Instanz die von den Dienstfunktionen verwendeten Daten enthält,
e)der Dienstanbieter aus den Instanzen zumindest eine für die Aktivierung bzw. Aktualisierung des Dienstes auswählt und
f)der Dienstanbieter den Dienst unter Verwendung der Dienstfunktionen und der vom Dienstanwender ausgewählten Instanzen aktiviert bzw. aktualisiert,
**dadurch gekennzeichnet, daß**
für einige Prototypen, zumindest aber einen, ein Datenformat gewählt wird, das die Aufnahme von sowohl Text als auch Anweisungscodes in einem textverträglichen Format, z.B. als symbolische Befehle, gestattet,
die in dem gewählten Datenformat dargestellten Markup-Prototypen mit Anweisungscodes ausgestattet werden, welche der Erzeugung von Instanzen dienen,
der Inhalt zumindest eines Markup-Prototyps auf dem Terminal des Dienstanbieters angezeigt wird und
der Dienstanbieter die Instanzen dadurch erzeugt, daß er über auf seinem Terminal eingegebene Befehle aus den Anweisungscodes des zumindest einen angezeigten Markup-Prototyps zumindest einen Anweisungscode auswählt und ablaufen läßt.

2. Verfahren nach Anspruch 1, **dadurch gekennzeichnet, daß** eine graphische Struktur, die der logischen Struktur des Dienstes entspricht, bei der Erstellung bzw. Bearbeitung oder Konversion der Dienstdefinition seitens des Netzbetreibers erzeugt und mit Hilfe der textverträglichen Anweisungscodes in einem Markup-Prototyp abgelegt wird.

3. Verfahren nach Anspruch 2, **dadurch gekennzeichnet, daß** die graphische Struktur bei der Erzeugung oder Auswahl der Instanzen auf dem Terminal des Dienstanbieters dargestellt wird.

4. Verfahren nach einem der Ansprüche 1 bis 3, **dadurch gekennzeichnet, daß** ein Dienst dadurch definiert wird, daß der Netzbetreiber eine Anzahl vordefinierter Dienstbausteine auswählt und die Verknüpfung dieser Dienstbausteine untereinander und mit den Komponenten des intelligenten Netzes festlegt.

5. Verfahren nach Ansprüchen 2 und 4, **dadurch gekennzeichnet, daß** funktionell zusammengehörige Dienstbausteine zu Gruppen zusammengefaßt werden und jeder Gruppe zumindest ein Objekt der graphischen Struktur zugeordnet wird.

6. Verfahren nach einem der Ansprüche 1 bis 5, **dadurch gekennzeichnet, daß** bei der Erzeugung der Instanzen der Dienstanbieter zur Eingabe von Daten aufgefordert wird, die für die Erzeugung der Instanzen verwendet werden.

7. Verfahren nach Ansprüchen 5 und 6, **dadurch gekennzeichnet, daß** der Dienstanbieter dazu aufgefordert wird, Parameter von Dienstbausteinen einzugeben, und dies mit Hilfe von Formularen erfolgt, welche jeweils einem Objekt der graphischen Struktur zugeordnet sind und zur Eingabe von Parametern jeweils jener Dienstbausteine dienen, welche durch das einem Formular entsprechende Objekt repräsentiert werden.

8. Verfahren nach Anspruch 6 oder 7, **dadurch gekennzeichnet, daß** der Dienstanbieter die Eingabeaufforderung durch einen spezifischen Befehl auslöst, z.B. durch Auswählen eines Anweisungscodes oder durch Anklicken eines graphischen Elementes, dem ein Eingabeformular zugeordnet ist.

9. Verfahren nach einem der Ansprüche 1 bis 8, **dadurch gekennzeichnet, daß** für das Datenformat der Markup-Prototypen eine Markup-Sprache, z.B. HTML, verwendet und der Markup-Prototyp dem Dienstanbieter mit Hilfe eines für die Markup-Sprache geeigneten Browser-Programmes angezeigt wird.

10. Verfahren nach einem der Ansprüche 1 bis 9, **dadurch gekennzeichnet, daß** die Verbindung vom Terminal des Dienstanbieters zu der Dienstverwaltungsstation (SMP) über ein frei zugängliches Computernetz hergestellt wird.

11. Verfahren nach einem der Ansprüche 1 bis 10, **dadurch gekennzeichnet, daß** die Verbindung von dem Terminal des Dienstanbieters zu der Dienstverwaltungstation (SMP) über einen der Dienstverwaltungsstation zugeordneten Brandmauer-Rechner hergestellt wird.

12. Verfahren nach einem der Ansprüche 1 bis 11, **dadurch gekennzeichnet, daß** dem Dienstanbieter der Zugang auf die Dienstverwaltungsstation (SMP) bzw. der Zugriff auf die Prototypen erst nach Eingabe einer Autorisierung, z.B. eines PIN-Code oder einer Transaktions-Identifikationsnummer, gestattet wird.

13. Verfahren nach einem der Ansprüche 1 bis 12, **dadurch gekennzeichnet, daß** der Netzbetreiber für das Erstellen bzw. Bearbeiten der Dienstdefinition ein Definitionswerkzeug (SD) der Dienstverwaltungsstation (SMP) verwendet.

14. Verfahren nach einem der Ansprüche 1 bis 13, **dadurch gekennzeichnet, daß** der Netzbetreiber für das Konvertieren der Dienstdefinition ein Compilerwerkzeug (SC) der Dienstverwaltungsstation (SMP) verwendet.

15. Verfahren nach einem der Ansprüche 1 bis 14, **dadurch gekennzeichnet, daß** der Netzbetreiber den Dienst auf dem Telekommunikationsnetz (TKN) mit Hilfe eines Verwaltungswerkzeuges vorbereitet.

16. Verfahren nach einem der Ansprüche 1 bis 15, **dadurch gekennzeichnet, daß** die Erzeugung der Instanzen und/oder die Auswahl der Instanzen und/oder die Aktivierung bzw. Aktualisierung des Dienstes von einem Dienstteilnehmer durchgeführt wird, der hierfür von dem Dienstanbieter und/oder dem Netzbetreiber autorisiert wurde.

17. Verfahren zur Erzeugung von Dienstdatenprototypen, welche zur Beschreibung der in einem Telekommunikationsdienst eines intelligenten Netzes verwendeten Daten dienen,
**dadurch gekennzeichnet, daß**
für die Prototypen ein Datenformat gewählt wird, das die Aufnahme von sowohl Text als auch Anweisungscodes in einem textverträglichen Format, z.B. als symbolische Befehle, gestattet und
die Prototypen mit Anweisungscodes ausgestattet werden, welche der Erzeugung von Dienstdateninstanzen dienen, wobei die Instanzen die in einem Telekommunikationsdienst eines intelligenten Netzes verwendeten Daten enthalten.

18. Verfahren nach Anspruch 17, **dadurch gekennzeichnet, daß** eine graphische Struktur, die der logischen Struktur des Dienstes entspricht, erzeugt und mit Hilfe von textverträglichen Anweisungscodes in einem Prototyp abgelegt wird.

19. Verfahren nach Anspruch 18, **dadurch gekennzeichnet, daß** ein Dienst durch Auswählen einer Anzahl vordefinierter Dienstbausteine und Festlegen der Verknüpfung dieser Dienstbausteine untereinander und mit den Komponenten des intelligenten Netzes definiert, funktionell zusammengehörige Dienstbausteine zu Gruppen zusammengefaßt und jeder Gruppe zumindest ein Objekt der graphischen Struktur zugeordnet werden.

20. Verfahren nach einem der Ansprüche 17 bis 19, **dadurch gekennzeichnet, daß** für das Datenformat der Prototypen eine Markup-Sprache, z.B. HTML, verwendet wird.

21. Verfahren zur Erzeugung von Dienstdateninstanzen mit Hilfe von Dienstdatenprototypen nach einem der Ansprüche 17 bis 20 durch einen Anwender, **dadurch gekennzeichnet, daß** der Inhalt zumindest eines Prototyps auf dem Terminal des Anwenders angezeigt wird und der Anwender die Instanzen dadurch erzeugt, daß er über auf seinem Terminal eingegebene Befehle aus den Anweisungscodes des zumindest einen angezeigten Prototyps zumindest einen geeigneten auswählt und ablaufen läßt.

22. Verfahren zur Erzeugung von Dienstdateninstanzen nach Anspruch 21 mit Hilfe von Dienstdatenprototypen nach einem der Ansprüche 18 bis 20, **dadurch gekennzeichnet, daß** die graphische Struktur auf einem Terminal des Anwenders dargestellt wird.

23. Verfahren nach einem der Ansprüche 21 bis 22, **dadurch gekennzeichnet, daß** der Anwender zur Eingabe von Daten aufgefordert wird, die für die Erzeugung der Instanzen verwendet werden.

24. Verfahren zur Erzeugung von Dienstdateninstanzen nach Anspruch 23 mit Hilfe von Dienstdatenprototypen nach Anspruch 19 oder 20, **dadurch gekennzeichnet, daß** der Anwender dazu aufgefordert wird, Parameter von Dienstbausteinen einzugeben, und dies mit Hilfe von Formularen erfolgt, welche jeweils einem Objekt der graphischen Struktur zugeordnet sind und zur Eingabe von Parametern jeweils jener Dienstbausteine dienen, welche durch das einem Formular entsprechende Objekt repräsentiert werden.

25. Verfahren nach Anspruch 23 oder 24, **dadurch gekennzeichnet, daß** der Anwender die Eingabeaufforderung durch einen spezifischen Befehl auslöst , z.B. durch Auswählen eines Anweisungscodes oder durch Anklicken eines graphischen Elementes, dem ein Eingabeformular zugeordnet ist.

26. Verfahren nach einem der Ansprüche 21 bis 25, **dadurch gekennzeichnet, daß** der Prototyp dem Anwender mit Hilfe eines für die Markup-Sprache geeigneten Browser-Programmes angezeigt wird.

27. Verfahren nach einem der Ansprüche 21 bis 26, **dadurch gekennzeichnet, daß** der Anwender die Erzeugung der Instanzen von einem mit der Dienstverwaltungsstation (SMP) des intelligenten Netzes über ein frei zugängliches Computernetz verbundenen Terminal aus durchführt.

28. Verfahren nach einem der Ansprüche 21 bis 27, **dadurch gekennzeichnet, daß** die Verbindung von dem Terminal des Anwenders zu der Dienstverwaltungstation (SMP) über einen der Dienstverwaltungsstation zugeordneten Brandmauer-Rechner hergestellt wird.

29. Verfahren nach einem der Ansprüche 21 bis 28, **dadurch gekennzeichnet, daß** dem Anwender der Zugang auf die Dienstverwaltungsstation (SMP) bzw. der Zugriff auf die Prototypen erst nach Eingabe einer Autorisierung, z.B. eines PIN-Code oder einer Transaktions-Identifikationsnummer, gestattet wird.

## Claims

1. Method for setting up and/or processing a service in an intelligent network which is supported by a network operator and which comprises an actual telecommunication network, at least one service control point (SCP) set up for implementing the services of the intelligent network and at least one service management point (SMP) assigned to the service control point(s), whereby
a) in response to the request of a service provider the network operator creates or processes a definition of a service,
b) the network operator converts this service definition into service functions and service data prototypes on the service management point (SMP), whereby the service functions represent the procedures to be implemented by the service and these prototypes serve to describe the data used by the service functions,
c) the network operator prepares the service by using the service functions and prototypes on the intelligent network,
d) working from a terminal by way of a connection established with the service management point (SMP), the service provider generates at least one service data entity for each of the prototypes, whereby this entity contains the data used by the service functions,
e) the service provider selects at least one of the entities for activation or updating of the service, and
f) the service provider activates or updates the service using the service functions and the entities selected by the service user.
**characterized in that**
a data format is selected for several prototypes, but at least one, which permits the inclusion of both text and also instruction codes in a text-compatible format, for example in the form of symbolic commands,
the markup prototypes described in the selected data format are equipped with instruction codes that are used for generating entities,
the contents of at least one markup prototype are displayed on the terminal of the service provider, and
the service provider generates the entities by using commands entered at its terminal to select at least one instruction code from the instruction codes of the at least one displayed markup prototype and allowing the instruction code to execute.

2. Method according to Claim 1, **characterized in that** a graphical structure corresponding to the logical structure of the service is generated during the creation and/or processing or conversion of the service definition on the part of the network operator and stored with the aid of the text-compatible instruction codes in a markup prototype.

3. Method according to Claim 2, **characterized in that** the graphical structure is displayed on the terminal of the service provider during generation or selection of the entities.

4. Method according to one of Claims 1 to 3, **characterized in that** a service is defined by the fact that the network operator selects a number of predefined service modules and specifies the linkage of these service modules with one another and with the components of the intelligent network.

5. Method according to Claims 2 and 4, **characterized in that** service modules which belong together functionally are combined to form groups and at least one object in the graphical structure is assigned to each group.

6. Method according to one of Claims 1 to 5, **characterized in that** during the generation of the entities the service provider is prompted to enter data which is used for the generation of the entities.

7. Method according to Claims 5 and 6, **characterized in that** the service provider is prompted to enter parameters for service modules, and this is done with the aid of forms which are assigned in each case to an object in the graphical structure and are used for the entry of parameters for those respective service modules which are represented by the object corresponding to a form.

8. Method according to Claims 6 or 7, **characterized in that** the service provider triggers the input prompt by means of a specific command, for example by selecting an instruction code or by clicking on a graphical element to which an input form is assigned.

9. Method according to one of Claims 1 to 8, **characterized in that** a markup language, HTML for example, is used for the data format of the markup prototypes and the markup prototype is displayed to the service provider with the aid of a browser program which is suitable for the markup language.

10. Method according to one of Claims 1 to 9, **characterized in that** the connection from the terminal of the service provider to the service management point (SMP) is established by way of a freely accessible computer network.

11. Method according to one of Claims 1 to 10, **characterized in that** the connection from the terminal of the service provider to the service management point (SMP) is established by way of a firewall computer assigned to the service management point.

12. Method according to one of Claims 1 to 11, **characterized in that** access to the service management point (SMP) or access to the prototypes is granted to the service provider only following input of an authorization, for example a PIN code or a transaction identification number.

13. Method according to one of Claims 1 to 12, **characterized in that** the network operator uses a definition tool (SD) on the service management point (SMP) for creating and/or processing the service definition.

14. Method according to one of Claims 1 to 13, **characterized in that** the network operator uses a compiler tool (SC) on the service management point (SMP) for converting the service definition.

15. Method according to one of Claims 1 to 14, **characterized in that** the network operator prepares the service on the telecommunication network (TKN) with the aid of a management tool.

16. Method according to one of Claims 1 to 15, **characterized in that** the generation of the entities and/or the selection of the entities and/or the activation or updating of the service is performed by a service user who has received authorization for this purpose from the service provider and/or the network operator.

17. Method for generating service data prototypes which serve to describe the data used in a telecommunication service of an intelligent network,
**characterized in that**
a data format is chosen for the prototypes which permits the inclusion of both text and also instruction codes in a text-compatible format, for example in the form of symbolic commands, and
the prototypes are equipped with instruction codes that are used for generating service data entities, whereby the entities contain the data used in a telecommunication service of an intelligent network.

18. Method according to Claim 17, **characterized in that** a graphical structure corresponding to the logical structure of the service is generated and stored with the aid of the text-compatible instruction codes in a prototype.

19. Method according to Claim 18, **characterized in that** a service is defined by selection of a number of predefined service modules and specification of the linkage of these service modules with one another and with the components of the intelligent network, service modules which belong together functionally are combined to form groups and at least one object in the graphical structure is assigned to each group.

20. Method according to one of Claims 17 to 19, **characterized in that** a markup language, HTML for example, is used for the data format of the prototypes.

21. Method for generating service data entities with the aid of service data prototypes according to one of Claims 17 to 20 by a user, **characterized in that** the contents of at least one prototype are displayed on the terminal of the user and the user generates the entities by using commands entered at his terminal to select at least one suitable instruction code from the instruction codes of the at least one displayed prototype and allowing the instruction code to execute.

22. Method for generating service data entities according to Claim 21 with the aid of service data prototypes according to one of Claims 18 to 20, **characterized in that** the graphical structure is displayed on a terminal of the user.

23. Method according to one of Claims 21 to 22, **characterized in that** the user is prompted to enter data which is used for the generation of the entities.

24. Method for generating service data entities according to Claim 23 with the aid of service data prototypes according to Claim 19 or 20, **characterized in that** the user is prompted to enter parameters for service modules, and this is done with the aid of forms which are assigned in each case to an object in the graphical structure and are used for the entry of parameters for those respective service modules which are represented by the object corresponding to a form.

25. Method according to Claim 23 or 24, **characterized in that** the user triggers the input prompt by means of a specific command, for example by selecting an instruction code or by clicking on a graphical element to which an input form is assigned.

26. Method according to one of Claims 21 to 25, **characterized in that** the prototype is displayed to the user with the aid of a browser program which is suitable for the markup language.

27. Method according to one of Claims 21 to 26, **characterized in that** the user carries out the generation of the entities from a terminal connected with the service management point (SMP) of the intelligent network by way of a freely accessible computer network.

28. Method according to one of Claims 21 to 27, **characterized in that** the connection from the terminal of the user to the service management point (SMP) is established by way of a firewall computer assigned to the service management point.

29. Method according to one of Claims 21 to 28, **characterized in that** the user is granted access to the service management point (SMP) or access to the prototypes only following input of an authorization, for example a PIN code or a transaction identification number.

## Revendications

1. Procédé pour la mise en place et/ou la modification un service d'un réseau intelligent, qui est géré par un exploitant de réseau et qui comprend un réseau de télécommunications proprement dit, au moins un point de commande de service (SCP) créé pour l'exécution des services du réseau intelligent et au moins un point de gestion de service (SMP) affecté au(x) point(s) de commande de service dans lequel
a) l'exploitant de réseau crée resp. modifie une définition du service sur commande d'un prestataire de services,
b) l'exploitant du réseau convertit cette définition du service sur le point de gestion de service (SMP) en fonctions de service et en prototypes de données de service, les fonctions de service représentant les procédures à exécuter par le service et ces prototypes servant à décrire les données utilisées par les fonctions de service,
c) l'exploitant de réseau prépare le service en utilisant les fonctions de service et les prototypes sur le réseau intelligent,
d) le prestataire de services génère au moins une instance de données de service à partir d'un terminal par l'intermédiaire d'une liaison établie avec le point de gestion de service (SMP), cette instance contenant les données utilisées par les fonctions de service,
e) le prestataire de services sélectionne parmi les instances au moins une instance pour l'activation resp. l'actualisation du service et
f) le prestataire de services active resp. actualise le service en utilisant les fonctions de service et les instances sélectionnées par l'utilisateur de services,
**caractérisé en ce que**
pour un certain nombre de prototypes, mais au moins pour l'un d'entre eux, un format de données est choisi, qui permet d'enregistrer tant du texte que des codes d'instructions dans un format compatible texte, comme par ex. des instructions symboliques,
les prototypes "markup" représentés dans le format de données sélectionné sont dotés de codes d'instructions, qui servent à produire des instances,
le contenu d'au moins un prototype "markup" est affiché sur le terminal du prestataire de services et
le prestataire de services produit les instances en sélectionnant et en laissant exécuter au moins un code d'instructions au moyen des instructions entrées sur son terminal à partir des codes d'instructions de l'au moins un prototype "markup" affiché.

2. Procédé selon la revendication 1, **caractérisé en ce qu'**une structure graphique, qui correspond à la structure logique du service, est produite lors de la création resp. de l'exécution ou de la conversion de la définition du service par l'exploitant du réseau et qui est déposée dans un prototype "markup" à l'aide des codes d'instructions compatibles texte.

3. Procédé selon la revendication 2, **caractérisé en ce que** la structure graphique est représentée sur le terminal du prestataire de services lors de la production ou de la sélection des instances.

4. Procédé selon l'une des revendications 1 à 3, **caractérisé en ce qu'**un service est défini **en ce que** l'exploitant du réseau sélectionne un certain nombre de modules de service prédéfinis et qu'il définit l'association mutuelle de ces modules de service et avec les composants du réseau intelligent.

5. Procédé selon les revendications 2 et 4, **caractérisé en ce que** les modules de service connexes au plan fonctionnel sont regroupés et qu'au moins un objet de la structure graphique est affecté à chaque groupe.

6. Procédé selon l'une des revendications 1 à 5, **caractérisé en ce que** le prestataire de services est invité à entrer des données lors de la production des instances, qui sont utilisées pour produire les instances.

7. Procédé selon les revendications 5 et 6, **caractérisé en ce que** le prestataire de services est invité à entrer des paramètres de modules de service, ce qui s'effectue à l'aide de formulaires, chacun étant affecté à un objet de la structure graphique et servant à entrer des paramètres de ces modules de service, qui sont représentés par l'objet correspondant à un formulaire.

8. Procédé selon la revendication 6 ou 7, **caractérisé en ce que** le prestataire de services déclenche l'invitation à entrer des données par une instruction spécifique, par ex. en sélectionnant un code d'instructions ou en cliquant sur un élément graphique auquel un formulaire d'entrée est affecté.

9. Procédé selon l'une des revendications 1 à 8, **caractérisé en ce que** un langage "markup", par ex. HTML, est utilisé pour le format des données des prototypes "markup" et **en ce que** le prototype "markup" est affiché aux prestataires de service à l'aide d'un programme de navigation approprié au langage "markup".

10. Procédé selon l'une des revendications 1 à 9, **caractérisé en ce que** la liaison du terminal du prestataire de services au point de gestion de service (SMP) est établie par un réseau informatique en libre accès.

11. Procédé selon l'une des revendications 1 à 10, **caractérisé en ce que** la liaison du terminal du prestataire de services au point de gestion de service (SMP) est établie par un ordinateur pare-feu affecté au poste de gestion du service.

12. Procédé selon l'une des revendications 1 à 11, **caractérisé en ce que** l'accès au point de gestion de service (SMP) resp, l'accès aux prototypes n'est accordé au prestataire de services qu'après entrée d'une autorisation, par ex. d'un code d'identification personnel PIN ou d'un numéro d'identification de transaction.

13. Procédé selon l'une des revendications 1 à 12, **caractérisé en ce que** l'exploitant de réseau utilise un outil de définition (SD) du point de gestion de service (SMP) pour la création resp. la modification de la définition de services.

14. Procédé selon l'une des revendications 1 à 13, **caractérisé en ce que** l'exploitant du réseau utilise un outil compilateur (SC) du point de gestion de service (SMP) pour la conversion de la définition du service.

15. Procédé selon l'une des revendications 1 à 14, **caractérisé en ce que** l'exploitant de réseau prépare le service sur le réseau de télécommunications (TKN) à l'aide d'un outil de gestion.

16. Procédé selon l'une des revendications 1 à 15, **caractérisé en ce que** la production des instances et/ou la sélection des instances et/ou l'activation resp. l'actualisation du service est exécutée par un abonné au service autorisé à cet effet par le prestataire de services et/ou l'exploitant du réseau.

17. Procédé pour la production de prototypes de données de service, qui servent à décrire les données utilisées dans un service de télécommunications d'un réseau intelligent,
**caractérisé en ce que**
pour les prototypes un format de données est choisi, qui permet d'enregistrer à la fois du texte et des codes d'instruction dans un format compatible texte, comme par ex. des instructions symboliques et
les prototypes sont dotés de codes d'instruction, qui servent à produire des instances de données de service, les instances contenant les données utilisées dans un service de télécommunications d'un réseau intelligent.

18. Procédé selon la revendication 17, **caractérisé en ce qu'**une structure graphique, qui correspond à la structure logique du service, est produite et déposée dans un prototype à l'aide de codes d'instruction compatibles texte.

19. Procédé selon la revendication 18, **caractérisé en ce qu'**un service est défini par la sélection d'un nombre prédéfini de modules de service et par la définition de l'association mutuelle de ces modules de service et avec les composants du réseau intelligent, les modules de service connexes au plan fonctionnel sont regroupés et au moins un objet de la structure graphique est affecté à chaque groupe.

20. Procédé selon l'une des revendications 17 à 19, **caractérisé en ce qu'**un langage "markup", par ex. HTML, est utilisé pour le format des données des prototypes.

21. Procédé pour produire des instances de données de service à l'aide de prototypes de données de service selon l'une des revendications 17 à 20 par un utilisateur, **caractérisé en ce que** le contenu d'au moins un prototype est affiché sur le terminal de l'utilisateur et l'utilisateur produit les instances en sélectionnant et en laissant exécuter au moins un code d'instructions approprié au moyen d'instructions entrées sur son terminal à partir des codes d'instruction.

22. Procédé pour produire des instances de données de service selon la revendication 21 à l'aide de prototypes de données de service selon l'une des revendications 18 à 20, **caractérisé en ce que** la structure graphique est représentée sur un terminal de l'utilisateur.

23. Procédé selon l'une des revendications 21 à 22, **caractérisé en ce que** l'utilisateur est invité à entrer des données, qui sont utilisées pour la production des instances.

24. Procédé pour la production d'instances de données de service selon la revendication 23 à l'aide de prototypes de données de service selon la revendication 19 ou 20, **caractérisé en ce que** l'utilisateur est invité à entrer des paramètres de module de service, ceci s'effectuant à l'aide de formulaires, qui sont affectés chacun à un objet de la structure graphique et qui servent à entrer des paramètres de chacun de ces modules de service, qui sont représentés par l'objet correspondant à un formulaire.

25. Procédé selon la revendication 23 ou 24, **caractérisé en ce que** l'utilisateur déclenche l'invitation à entrer des données par une instruction spécifique, par ex. en sélectionnant un code d'instructions ou en cliquant sur un élément graphique auquel un formulaire d'entrée est affecté.

26. Procédé selon l'une des revendications 21 à 25, **caractérisé en ce que** le prototype est affiché à l'utilisateur à l'aide d'un programme de navigation approprié au langage "markup".

27. Procédé selon l'une des revendications 21 à 26, **caractérisé en ce que** l'utilisateur effectue la production des instances à partir d'un terminal relié au point de gestion de service (SMP) du réseau intelligent au moyen d'un réseau informatique en libre accès.

28. Procédé selon l'une des revendications 21 à 27, **caractérisé en ce que** la liaison du terminal de l'utilisateur au point de gestion de service (SMP) est établie au moyen d'un ordinateur pare-feu affecté au point de gestion de service.

29. Procédé selon l'une des revendications 21 à 28, **caractérisé en ce que** l'accès au point de gestion de service (SMP) resp. aux prototypes n'est accordé à l'utilisateur qu'après entrée d'une autorisation, par ex. d'un code d'identification personnel PIN ou d'un numéro d'identification de transaction.
